# EUROPEAN PATENT SPECIFICATION

(11) **EP 1 148 401 B1**
(45) Date of publication and mention of the grant of the patent: **17.01.2007**
(21) Application number: 01302605.9
(22) Date of filing: 21.03.2001
(51) Int. Cl.: G05B 19/05, G05B 19/23

(54) **Monitoring motion**
Bewegungsüberwachung
Surveillance de mouvement

(30) Priority: 23.03.2000 GB 0007099
(43) Date of publication of application: 24.10.2001
(73) Proprietor: OMRON CORPORATION, Kyoto-shi, Kyoto 600-8530 (JP)
(72) Inventor: Foreman, Tim, 5627 VV Eindhoven (NL); Loef, Peter, 4003 DK Tiel (NL)
(74) Representative: Calderbank, Thomas Roger

(56) References cited:
- US-A- 5 023 770
- US-A- 5 291 391

## Description

The present invention relates to an apparatus and method for monitoring motion. It is particularly, but not exclusively, concerned with monitoring rotary motion, which rotary motion is controlled by a programmable logic controller (PLC).

In conventional arrangements, a PLC controlling rotation about an axis permits the monitoring of the rotary motion by sampling the rotary motion and storing it in a suitable memory. Normally, those samples are stored in a RAM of the PLC, or even in a RAM of a computer system connected to the PLC. Sampling rates of 10 to 50ms can be achieved in this way, but the sampling rate depends heavily on the running of the ladder program of the PLC, since the storing of samples is dependent on the PLC itself. However, such conventional arrangements do not permit sampling with high time resolution in a way that is sufficiently stable to permit developments of the control algorithms which make use of the monitoring results.

US-A-5291391 discloses a programmable controller for controlling devices such as machine tools. Sensors detect the movement of the device and the outputs of those sensors at a specific time, are stored in a memory. The programmable controller reads those values to control the device. The output values stored in the memory are regularly updated by a read routine.

Therefore, a first aspect of the invention provides:
a method of monitoring motion of an object controlled by a programmable logic controller comprising:
   successively sampling the motion of the object, to generate a series of sampled values;
   storing the sampled values successively in a memory; and
   causing the programmable logic controller to read values in the memory for use in controlling the motion of the object;
   wherein:
      the sampling of the motion is by counting pulses generated by the object due to its motion;
      each value of the series of sampled values being a corresponding pulse count; and
      the memory is a cyclic memory.

In this way it is possible to sample at a stable, configurable and high rate, and to provide the samples thus obtained.

Thus, in the present invention the sampling of the motion is carried out by using a separate counter which stores the motion data in a cyclic memory which is then readable by the PLC. By separating sampling and storage in this way, limitations imposed by the ladder program of the PLC are avoided, and data may be sampled at a fixed time interval which is preferably at least five times as short as the time constraints of the system being monitored.

A second aspect of the present invention provides:
an apparatus for monitoring motion of an object comprising:
   a programmable logic controller for controlling the motion of the object;
   a counter is for successively sampling the motion of the object, to generate a series of sampled values;
   means for storing the sampled values successively in a memory;
   wherein the programmable logic controller is arranged to read values in the memory for use in controlling the motion of the object;
   wherein:
      the counter is arranged to sample the motion by counting pulses generated by the object due to its motion, whereby each value of the series of sampled values is a corresponding pulse count; and
      the memory is a cyclic memory.

Preferably, the sampling rate is a fixed value between e.g. 1ms and 999ms.

Normally, the cyclic memory will be read asynchronously by the PLC and may then be used by the PLC itself, e.g. for speed/position control or to analyse the behaviour of the movement being monitored.

An embodiment of the invention will now be described in detail, by way of example, with reference to the accompanying drawings, in which:
Fig. 1 is a schematic view of an apparatus for monitoring rotary motion in accordance with the first embodiment of the invention;
Fig. 2 shows in more detail parts of the apparatus of Fig. 1; and
Fig. 3 shows the sampling operation in more detail.

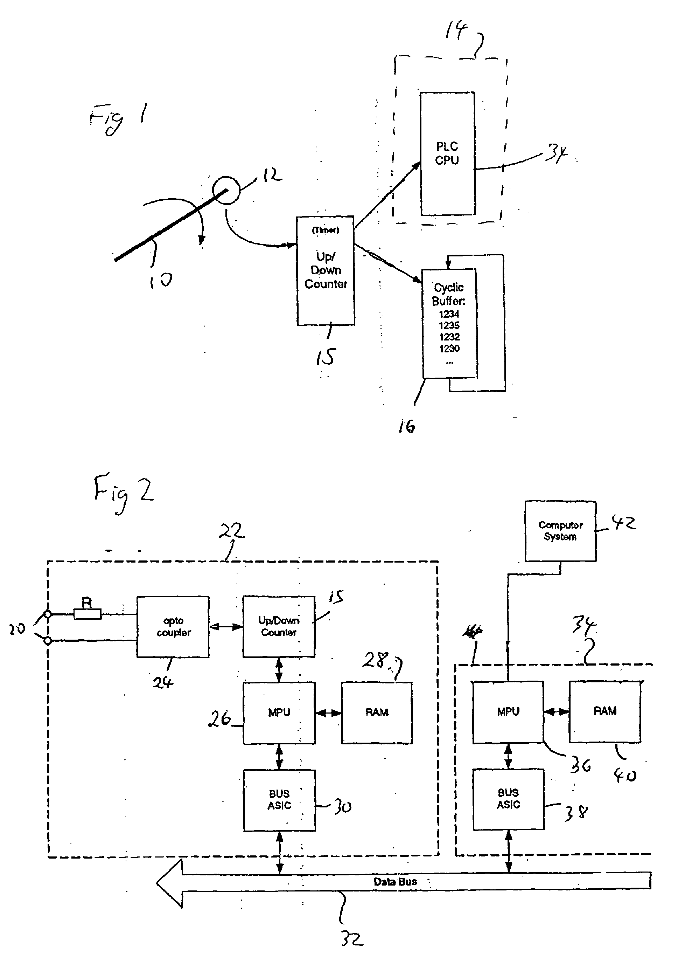

Referring first to Fig. 1, a shaft 10 rotates about an axis 12 under the control of a programmable logic controller (PLC) 14 but such control is, in itself, conventional and will not be described further. In accordance with the present invention, the rotary movement of the shaft 10 about the axis 12 is sampled and the position information thus obtained is passed to an up/down counter 15 which converts input pulses from a detector (not shown) interacting with the rotary shaft 10 to a counter value. The rate thus obtained are stored in a cyclic buffer 16. The cyclic buffer 16 can thus be read by the PLC 14.

Fig. 2 shows this structure in more detail. Input from the detector are passed via terminals 20 to a high speed counter unit 22. Those input signals pass to an optocoupler 24 of the high speed counter unit which filters the inputs and converts them into TTL level signals which are separate from the input signals themselves. The pulses thus obtained are passed to the up/down counter 15 which converts those pulses into a counter value. That conversion is controlled by a processor 26, which causes the counter 15 to transfer a count from a count value register within the counter 15 to a capture register. As count values are stored in that counter register, the processor 26 reads the capture register and stores the value in a memory 28 (which memory 28 contains the cyclic buffer 16). In addition, the processor 26 calculates the difference between the current value in the capture register and the previous value (retrieved from the memory 28), to obtain a difference representing an input rate. The value thus obtained is added to a structure within the memory 28 defining the buffer 16, to generate a rate history log.

The high speed counter unit 22 has an interface unit 30 which links the processor 26 to a databus 32, with a processor unit 34 of the PLC 14. That processor unit 34 contains a processor 36, an interface unit 38 which links the processor 36 to the databus 32, and a memory 40. This structure permits the rate history log to be copied from the memory 28 to the processor unit 34 via the bus 32, allowing the PLC to make use of the rate history thus obtained. The processor unit 34 may be connected to a separate computer system 42 for higher level control or off-line data processing.

The processor unit 34 may also configure the time basis of the operation of the high speed counter unit 22 by suitable configuration settings to the processor 26.

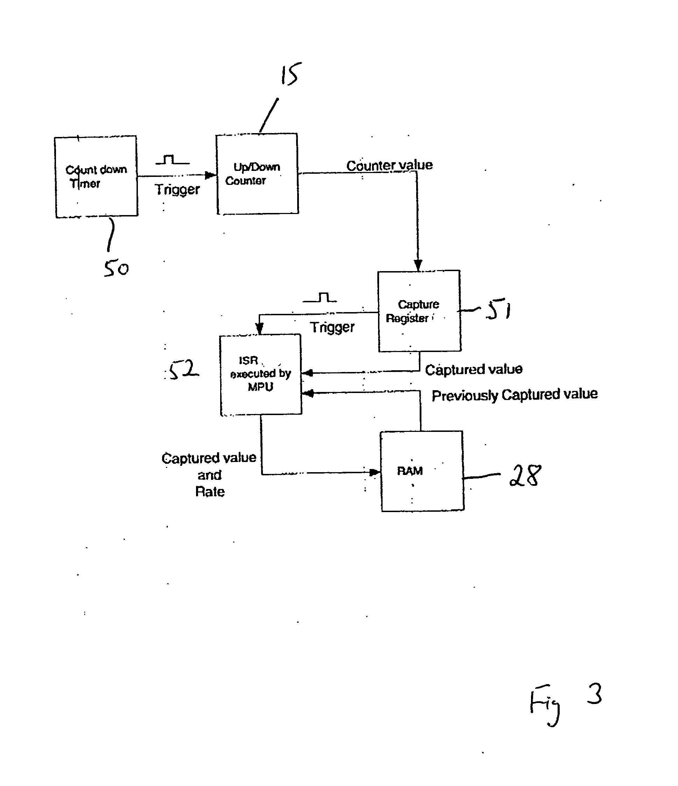

As previously mentioned, the counter 15 transfers a count from a count value register to a capture register. This operation, and the subsequent processing of the count values in the capture register will now be described with reference to Fig. 3.

The first stage is for the up/down counter 15 to output its current value. This output operation is triggered by a repetitive trigger signal from a count down timer 50. On receipt of that trigger signal, the up/down counter 15 transfers its current value to a capture register 51 in which that transferred value is stored. This capture action by the capture register 51 generates another trigger signal to an interrupt service routine (ISR) operation 52 which retrieves the captured value from the capture register 51, and passes the captured value and a rate value to the RAM 28. At the same time, the immediately previous captured value is retrieved from the RAM 28, and its value subtracted from the captured value which has just been retrieved from the capture register 51. It is this subtraction that yields the rate value which is stored in the RAM 28.

This operation is repeated for successive values from the up/down counter under the control of the count down timer 50. For each operation, the captured value which is passed from the capture register 51 to the ISR operation 52 becomes the previously captured value from the RAM 28 which is used in the next operation.

In Fig. 3, the count down timer 50, and register 51 and the ISR operation 52 are illustrated as separate components. In practice, the count down timer 51 and the ISR operation 52 can be elements within the MPU 26 in Fig. 2.

## Claims

1. A method of monitoring motion of an object (10) controlled by a programmable logic controller (4) comprising:
successively sampling the motion of the object (10), to generate a series of sampled values;
storing the sampled values successively in a memory (16); and
causing the programmable logic controller (14) to read values in the memory (16) for use in controlling the motion of the object (10);
**characterised in that**:
the sampling of the motion is by counting pulses generated by the object (10) due to its motion;
each value of the series of sampled values being a corresponding pulse count; and
the memory (16) is a cyclic memory.

2. A method according to claim 1, wherein each successive sampled value is compared with the immediately preceding sampled value, thereby to generate a rate value.

3. A method according to claim 2, wherein successive rate values are stored in a memory (28) accessible by the programmable logic controller (14).

4. An apparatus for monitoring motion of an object comprising:
a programmable logic controller (14) for controlling the motion of the object (10);
a counter is for successively sampling the motion of the object, to generate a series of sampled values;
means for storing the sampled values successively in a memory (16);
wherein the programmable logic controller (14) is arranged to read values in the memory (16) for use in controlling the motion of the object (10);
**characterised in that**:
the counter (15) is arranged to sample the motion by counting pulses generated by the object (10) due to its motion, whereby each value of the series of sampled values is a corresponding pulse count; and
the memory (16) is a cyclic memory.

5. An apparatus according to claim 4, wherein the counter is an up/down counter.

## Patentansprüche

1. Verfahren zur Überwachung der Bewegung eines Gegenstands (10) gesteuert durch eine programmierbare Logik-Steuerung (14), umfassend:
die fortlaufende Abtastung der Bewegung des Gegenstandes (10) zur Erzeugung einer Reihe von Abtastwerten;
das fortlaufende Speichern der Abtastwerte in einem Speicher (16); und
das Lesen von Werten im Speicher (16) durch die programmierbare Logik-Steuerung (14) herbeiführen, um diese zur Steuerung der Bewegung des Gegenstandes (10) zu verwenden;
**dadurch gekennzeichnet, dass**:
das Abtasten der Bewegung durch Zählen von Impulsen geschieht, die vom Gegenstand (10) aufgrund seiner Bewegung erzeugt werden;
dass jeder Wert der Reihe von Abtastwerten einem entsprechenden Impulszählerstand entspricht; und dass
der Speicher (16) ein zyklischer Speicher ist.

2. Verfahren nach Anspruch 1, wobei jeder fortlaufend erhobene Abtastwert mit dem unmittelbar vorhergehenden Abtastwert verglichen wird, wodurch ein Bemessungswert erstellt wird.

3. Verfahren nach Anspruch 2, wobei aufeinanderfolgende Bemessungswerte in einem für die programmierbare Logik-Steuerung (14) zugänglichen Speicher (28) gespeichert werden.

4. Vorrichtung zur Überwachung der Bewegung eines Gegenstandes, umfassend:
eine programmierbare Logik-Steuerung (14) zur Steuerung der Bewegung des Gegenstandes (10);
einen Zähler zur fortlaufenden Abtastung der Bewegung eines Gegenstandes zur Erstellung einer Reihe von Abtastwerten;
ein Mittel zur fortlaufenden Speicherung der Abtastwerte in einem Speicher (16);
worin die programmierbare Logik-Steuerung (14) ausgebildet ist, um Werte im Speicher (16) zu lesen, um diese zur Steuerung der Bewegung des Gegenstandes (10) zu verwenden;
**dadurch gekennzeichnet, dass**:
der Zähler (15) ausgebildet ist, um die Bewegung durch Zählen von Impulsen abzutasten, die durch den Gegenstand (10) aufgrund seiner Bewegung erzeugt werden, wobei jeder Wert der Reihe der Abtastwerte einem entsprechenden Impulszählerstand entspricht; und
dass der Speicher (16) ein zyklischer Speicher ist.

5. Vorrichtung nach Anspruch 4, wobei der Zähler ein Vorwärts-Rückwärtszähler ist.

## Revendications

1. Procédé pour surveiller un mouvement d'un objet (10) commandé par un régisseur logique programmable (14) comprenant les étapes consistant à:
échantillonner successivement le mouvement de l'objet (10) pour produire une série de valeurs échantillonnées;
stocker les valeurs échantillonnées successivement dans une mémoire (16); et
amener le régisseur logique programmable (14) à lire des valeurs dans la mémoire (16) destinées à être utilisées pour commander le mouvement de l'objet (10);
**caractérisé en ce que**:
l'échantillonnage du mouvement se fait par le comptage des impulsions produites par l'objet (10) par suite de son mouvement;
chaque valeur de la série de valeurs échantillonnées étant un compte d'impulsions correspondant; et
la mémoire (16) est une mémoire cyclique.

2. Procédé selon la revendication 1, où chaque valeur échantillonnée successive est comparée avec la valeur échantillonnée directement précédente pour produire ainsi une valeur nominale.

3. Procédé selon la revendication 2, où des valeurs nominales successives sont stockées dans une mémoire (28) accessible au régisseur logique programmable (14).

4. Appareil pour surveiller le mouvement d'un objet comprenant:
un régisseur logique programmable (14) pour commander le mouvement de l'objet (10);
un compteur pour échantillonner successivement le mouvement de l'objet, pour produire une série de valeurs échantillonnées;
un moyen pour stocker les valeurs échantillonnées successivement dans une mémoire (16);
où le régisseur logique programmable (14) est agencé pour lire des valeurs dans la mémoire (16) utilisées pour commander le mouvement de l'objet (10);
**caractérisé en ce que**:
le compteur (15) est agencé pour échantillonner le mouvement en comptant des impulsions produites par l'objet (10) en raison de son mouvement, par quoi chaque valeur de la série de valeurs échantillonnées est un compte d'impulsions correspondant; et
la mémoire (16) est une mémoire cyclique.

5. Appareil selon la revendication 4, où le compteur est un compteur/décompteur.
